# EUROPEAN PATENT APPLICATION

(11) **EP 4 668 524 A1**
(43) Date of publication of application: **24.12.2025**
(21) Application number: 25184328.0
(22) Date of filing: 20.06.2025
(51) Int. Cl.: H02J 3/26, H02J 3/38, H02M 11/00, H02J 3/32, B60L 55/00

(54) **CONVERTER FOR FORMING THE NEUTRAL IN AN ISLANDED SPLIT-PHASE POWER SYSTEM**

(30) Priority: 20.06.2024 US 202418748373
(71) Applicant: Eaton Intelligent Power Limited, Dublin 4 (IE)
(72) Inventor: SCHROEDERMEIER, Andy, Whitefish Bay, 53217 (US); SWAMY, Mahesh Mysore, Gurnee, 60031 (US); GRAZIANI, Santino Fiorello, Aliquippa, 15001 (US); JIMENEZ GONZALEZ, Sandy Omar, Corapolis, 15108 (US)
(74) Representative: Jolliffe, Jack Louis

(57) **Abstract**

A neutral forming converter provides a center point neutral reference when a single-phase power source supplies power to a load center in a split-phase power system islanded from the electrical grid. When a load center is islanded and the center-tapped utility transformer cannot provide a neutral reference, a single-phase power source such as a bidirectional electric vehicle charger can supply power to the load center but will require a neutral reference for loads that operate on only half the line-to-line voltage. Without a neutral reference, loads with different impedances can cause the single-phase power system to become unbalanced. The neutral forming converter connects circuitry forming a neutral reference node between the two line voltages of the single-phase power supply. The converter actively balances the voltage between the loads connected across Line 1 and the neutral reference and that between the loads connected across Line 2 and the neutral reference.

## Description

### FIELD OF THE INVENTION

The disclosed concept relates generally to electrical power systems, and in particular, to residential loads wherein a single-phase AC power source such as an electric vehicle (EV) bidirectional charger can serve as a power source to other loads connected to a load center.

### BACKGROUND OF THE INVENTION

One benefit of the modern electric vehicle (EV) is that many are equipped with a bidirectional charger. Bidirectional EV charging enables an electric vehicle to receive power from the electrical grid and also enables energy stored in the battery of an electric vehicle to be supplied to the electrical grid. Bidirectional charging capability enables electric vehicles to provide emergency backup power for a home in order to fully or partially power loads connected to the home during a power outage, or during normal operation if desired.

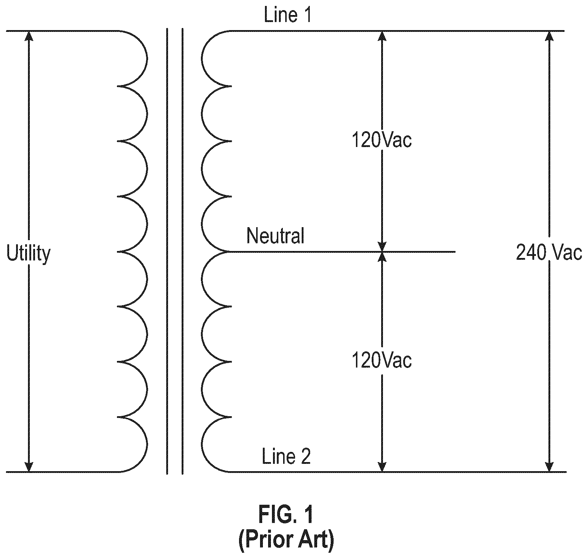

The residential power system in North America employs a split-phase connection with two lines and a center referenced neutral connection, typically with a nominal voltage of 240V line-to-line and 120V line to neutral, as shown in FIG. 1. When such a residential power system is disconnected from the electrical grid, it cannot be directly supplied from the bidirectional onboard chargers included in electric vehicles. This is because the output structure of the on-board EV charger is typically a 2-wire 240V supply lacking a split phase output with a reference conductor. A center-tapped single phase transformer, autotransformer, or isolation transformer is thus needed to convert the 2-wire output to a split phase 3-wire output. The same limitations apply for other single-phase sources such as solar inverters or other alternate energy source based inverters connected to residential systems. To supply the 120V loads in a home, a neutral reference must be formed to power the 120V loads that are connected between Line 1 and Neutral or Line 2 and Neutral. Without a neutral reference, the voltage will divide unevenly across the 120V loads based on the difference in the load impedance, causing the voltage to go out of the normal tolerance range.

A neutral reference for a single-phase power source can be formed using an autotransformer, but an autotransformer is heavy, bulky, expensive, and occupies significant space. As such, while bidirectional charging is a significant benefit of owning single-phase power-supplying devices such as electric vehicles, this benefit cannot be fully realized if the user does not have access to a neutral reference that can connect to the single-phase power source.

There is thus room for improvement in systems that provide bidirectional charging in the residential context.

### SUMMARY OF THE INVENTION

These needs, and others, are met by a neutral forming converter that provides a neutral reference when a single-phase power source is supplying power to a load center in a split-phase power system due to the load center being islanded from the electrical grid. The neutral forming converter is structured for use with a single-phase power source in order to power loads needing a split phase source like those found in residential applications.

In accordance with one aspect of the disclosed concept, a neutral forming converter is structured for use with a single-phase power source in order to power loads connected to a load center. The neutral-forming converter comprises a neutral forming circuit, and a controller configured to activate the neutral forming circuit. The neutral forming circuit is structured to receive a single-phase AC voltage across a first line conductor and a second line conductor as input and is configured to output the single-phase AC voltage with a center point neutral reference voltage, the center point neutral reference voltage being voltage at the midpoint between voltage of the first line conductor and voltage of the second line conductor. The neutral forming circuit is structured such that, when a first load is connected between the first line conductor and the center point neutral reference and has a first impedance and a second load is connected between the second line conductor and the center point neutral reference and has a second impedance different from the first impedance, the voltage across the first load and the voltage across the second load are balanced.

In accordance with another aspect of the disclosed concept, a load center comprises: a main circuit breaker structured to connect to a utility electrical grid and comprising a main bus, a plurality of branch circuit breakers connected to the main bus, and a neutral forming inverter. The plurality of branch circuit breakers includes: a first branch circuit breaker structured to electrically connect to a single-phase AC power source; and a plurality of other branch circuit breakers that excludes the first circuit breaker, each other branch circuit breaker being structured to electrically connect to a unique load. The neutral-forming converter is electrically connected to the first branch circuit breaker and comprises a neutral forming circuit and a controller configured to activate the neutral forming circuit. The neutral forming circuit is configured to receive, as input from the first branch circuit breaker, a single-phase AC voltage across a first line conductor and a second line conductor. The neutral forming circuit is configured to output the single-phase AC voltage with a center point neutral reference voltage, the center point neutral reference voltage being voltage at the midpoint between voltage of the first line conductor and voltage of the second line conductor. The neutral forming circuit is structured such that, when a first load is connected between first line conductor and the center point neutral reference and has a first impedance, and a second load is connected between the second line conductor and the center point neutral reference and has a second impedance different from the first impedance, the voltage across the first load and the voltage across the second load are balanced. The neutral forming converter is structured to connect the output of the neutral forming circuit to the plurality of other branch circuit breakers.

### BRIEF DESCRIPTION OF THE DRAWINGS

A full understanding of the invention can be gained from the following description of the preferred embodiments when read in conjunction with the accompanying drawings in which:
FIG. 1 is a diagram showing the 240V line-to-line and 120V line to neutral nominal voltages of the residential power system found in parts of North America;
FIG. 2 is a diagram of an exemplary power distribution system including a neutral forming converter for use with single-phase power sources used to power loads in the load center, in accordance with an example embodiment of the disclosed concept;
FIG. 3 is a diagram showing how the neutral forming converter outputs a neutral reference in addition to the two line voltages output by the single-phase power source shown in FIG. 2, in accordance with an example embodiment of the disclosed concept;
FIG. 4 is a schematic diagram of a neutral forming circuit of the neutral forming converter shown in FIGS. 2-3, in accordance with an example embodiment of the disclosed concept; and
FIG. 5 shows two graphs that demonstrate how the neutral forming converter and its components shown in FIGS. 2-4 balance the voltages of two loads having two different impedances and connected to a single-phase power source, in accordance with an example embodiment of the disclosed concept.

### DETAILED DESCRIPTION OF THE INVENTION

Directional phrases used herein, such as, for example, left, right, front, back, top, bottom and derivatives thereof, relate to the orientation of the elements shown in the drawings and are not limiting upon the claims unless expressly recited therein.

As used herein, the singular form of "a", "an", and "the" include plural references unless the context clearly dictates otherwise.

As employed herein, when ordinal terms such as "first" and "second" are used to modify a noun, such use is simply intended to distinguish one item from another, and is not intended to require a sequential order unless specifically stated.

As employed herein, the term "controller" shall mean a programmable analog and/or digital device that can store, retrieve and process data; a processor; a control circuit; a computer; a workstation; a personal computer; a microprocessor; a microcontroller; a microcomputer; a central processing unit; a mainframe computer; a mini-computer; a server; a networked processor; or any suitable processing device or apparatus.

As employed herein, the statement that two or more parts or components are "coupled" shall mean that the parts are joined or operate together either directly or indirectly, i.e., through one or more intermediate parts or components, so long as a link occurs. As used herein, "directly coupled" means that two elements are directly in contact with each other. As used herein, "fixedly coupled" or "fixed" means that two components are coupled so as to move as one while maintaining a constant orientation relative to each other.

As employed herein, the term "number" shall mean one or an integer greater than one (i.e., a plurality).

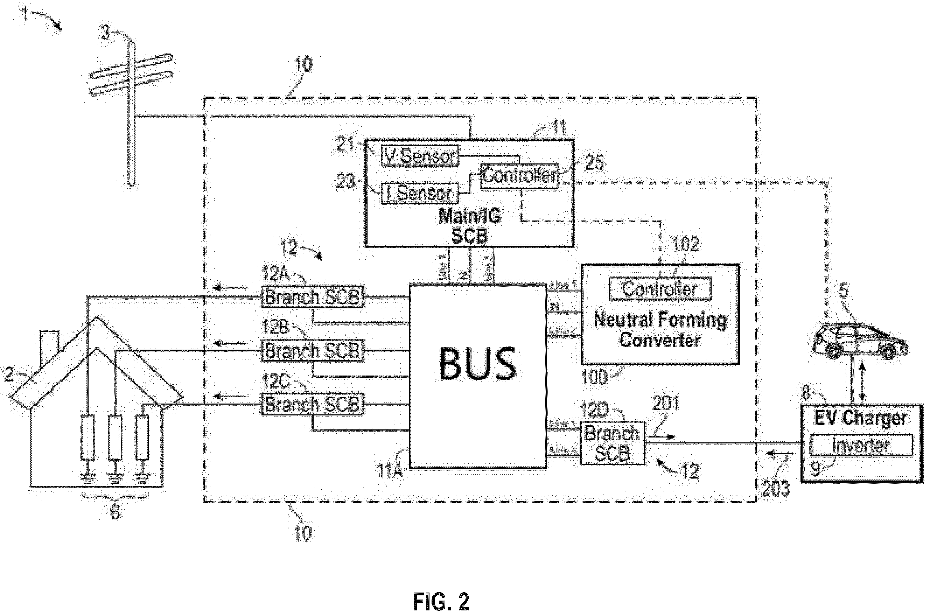

FIG. 2 is a diagram of a power distribution system 1 in which a load center 10 including a neutral forming inverter 100 is implemented, in accordance with an example embodiment of the disclosed concept. The power distribution system 1 supplies power to a building 2. The power distribution system 1 includes the utility electrical grid 3 and a single-phase power source 5. The single-phase power source 5 is a device that alternately acts as a single-phase power source and a load. In the figures, the single-phase power source 5 is depicted as an electric vehicle, but it will be apparent from the detailed description provided herein that the single-phase power source 5 can instead comprise other types of devices that can alternately act as a single-phase power source or as a load, such as solar panel arrays or home battery storage systems and their associated inverters, without departing from the scope of the disclosed concept. The functioning of the disclosed neutral forming inverter 100 is described herein in the context of the single-phase power source 5 being an electric vehicle, thus, the single-phase power source is referred to hereinafter as the "electric vehicle 5".

The load center 10 is structured to be electrically connected between the electrical grid 3, the single-phase power source 5, and a plurality of loads 6 connected to the electrical wiring of the building 2. It is expected that the disclosed neutral forming inverter 100 would most likely be used in a residential load center (as opposed to a commercial application), and so the building 2 is depicted as a house and the load center 10 is depicted as a residential load center in the figures, but it will be appreciated from the following detailed description that the neutral forming inverter 100 can be suitable for use in a light commercial load center as well without departing from the scope of the disclosed concept. The loads 6 are sometimes referred to herein as the "household loads 6" to differentiate them from the electric vehicle 5, since the electric vehicle 5 sometimes acts as a load to the load center 10 and sometimes acts as a power source to the load center 10. The household loads 6 and the electric vehicle 5 are referred to generally and collectively or generally and individually as the "load(s) 5,6".

The power distribution system 1 further comprises a bidirectional EV charger 8 and an inverter 9, with the inverter 9 being structured to convert between AC and DC power. It is noted that electric vehicles commonly include an on-board inverter and that bidirectional EV chargers also commonly include an inverter. Thus, a number of inverters 9 can be provided in the power distribution system 1 in any of the following manners: the electric vehicle 5 can include an on-board inverter 9, the EV charger 8 can include an inverter 9, or the electric vehicle 5 and the EV charger 8 can each comprise their own inverter 9. When the electric vehicle 5 includes an on-board inverter, the electric vehicle 5 can import AC power and convert it to DC power to charge the vehicle battery, and can convert DC power produced by the vehicle battery to AC power and export the AC power. When the electric vehicle 5 does not include the inverter 9, the bidirectional EV charger 8 is configured to output DC power when supplying power from the load center 10 to the electric vehicle 5 and to output AC power when supplying power from the electric vehicle 5 to the load center 10. It will be appreciated that, if the single-phase power source 5 were a solar panel array or home battery storage system instead of an electric vehicle, the power distribution system 1 would include the inverter 9 without the EV charger 8, so that power supplied from the single-phase power source 5 to the load center 10 would be converted from DC power (generated by the solar panel or home battery storage system) to AC power.

The load center 10 includes a main/IG (island-forming and grid-connecting) circuit breaker 11 (referred to hereinafter as the "main breaker 11" for brevity) and a plurality of branch circuit breakers 12 (referred to hereinafter as "branch breakers 12" for brevity) electrically connected to the bus 11A of the main breaker 11 (the bus 11A also being referred to hereafter as the "main bus 11A"). Each of the main breaker 11 and branch breakers 12 can optionally be "smart" devices, with the term "smart" being used to denote an ability to communicate with other devices. While the load center 10 is discussed herein in the context of including only circuit breakers to protect the connected loads, it is noted that the load center 10 could instead or additionally utilize other circuit protection devices such as fuses or fuse terminal blocks without departing from the scope of the disclosed concept.

In FIG. 2, four branch breakers 12 are shown, and each branch breaker 12 is additionally identified with a letter, i.e. 'A', 'B', 'C', 'D', so that each branch breaker 12 can be identified individually as needed. Branch breakers 12A, 12B, and 12C are connected to the household loads 6, while the branch breaker 12D is connected to the EV charger 8. The main breaker 11 is configured so that its bus 11A provides a line-to-line AC voltage of 240V and a line to neutral AC voltage of 120V, as shown in FIG. 1. Each of the loads 5,6 can thus be configured to either receive 240V or 120V from the main bus 11A. Under normal circumstances, the electrical grid 3 supplies power to the load center 10 through the main breaker 11, and the main breaker 11 is configured to route how power is provided to the branch breakers 12 from the electrical grid 3.

The main breaker 11 is electrically connected to the electrical grid 3 and comprises a voltage sensor 21, a current sensor 23, and a controller 25 connected to the voltage and current sensors 21, 23, enabling the main breaker 11 to sense grid voltage and current via the voltage and current sensors 21, 23. The controller 25 can thus determine if the main breaker 11 has been islanded from the electrical grid 3 (e.g. due to a power outage) based on the detected current and voltage. The main breaker 11 comprises a switch mechanism (not separately depicted in the figures) structured to remain closed as long as the power supplied by the electrical grid 3 to the main breaker 11 remains within the voltage and current ratings of the main breaker 11, and as long as the total current being drawn from all of the loads 5,6 does not exceed the current rating of the main breaker 11. The controller 25 can be configured to selectively connect and disconnect the main breaker 11 from the electrical grid 3. The main breaker 11 is referred to as islanding and grid-connecting, because closing the switch mechanism connects the load center 10 to the electrical grid 3 (i.e. grid-connecting) and because opening the switch mechanism islands the load center 10 from the electrical grid (i.e. islanding). The controller 25 is also configured to communicate with the electric vehicle 5 (or other single-phase power source 5).

Each branch breaker 12 comprises a switch mechanism that is structured to remain closed as long as the power supplied to the branch breaker 12 remains within the voltage and current ratings of the branch breaker 12, and as long as the total current being drawn from the load connected to the branch breaker 12 (i.e. either one of the household loads 6 or the electric vehicle 5) does not exceed the current rating of the branch breaker 12. For a given load 5,6 to receive power via its corresponding branch breaker 12 when the electrical grid 3 is supplying power to the main breaker 11, the switch mechanism of the main breaker 11 must be closed, and the switching mechanism of the corresponding branch breaker 12 must be closed. If a given individual load 5,6 draws current exceeding the current rating of its corresponding branch breaker 12 when the electrical grid 3 is supplying power to the main breaker 11, the switching mechanism of the corresponding branch breaker 12 will open so that the given individual load 5,6 is electrically isolated from the main bus 11A, but all other loads 5,6 connected to a branch breaker 12 whose switching mechanism is closed will continue to receive power from the main bus 11A.

The EV charger 8 is structured such that, when the electrical grid 3 is supplying power to the load center 10, power can flow from the branch breaker 12D to the EV charger 8 (i.e. in the direction 201). In the event that the load center 10 becomes islanded (i.e. electrically isolated) from the electrical grid 3 (for example and without limitation, due to a utility outage), no voltage appears on the main bus 11A. The bidirectional EV charger 8 is structured such that, if the battery of the electrical vehicle 5 has a charge when the load center 10 becomes islanded from the electrical grid 3, the bidirectional EV charger 8 can supply power to main bus 11A via the branch breaker 12D. The disclosed neutral forming converter 100 enables the other loads connected to the main bus 11A (i.e. the household loads 6) to receive the power supplied by the bidirectional EV charger 8 to the main bus 11A in a more effective manner than has previously been possible.

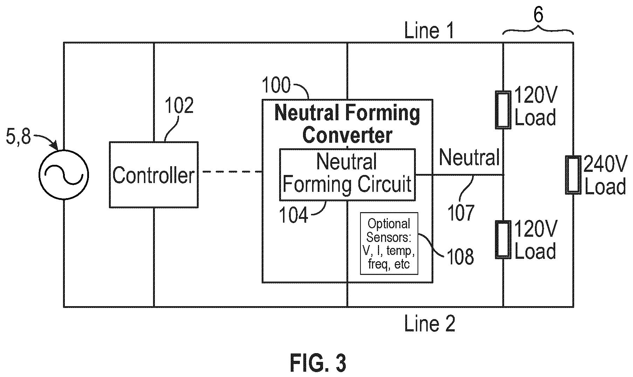

Reference is now made to FIG. 3 in conjunction with FIG. 2. FIG. 3 is a conceptual diagram of the neutral forming converter 100 shown in FIG. 2, in accordance with an example embodiment of the disclosed concept. EV systems are two-wire systems, in contrast with the three wire residential systems connected to the electrical grid 3. As previously stated herein, when powering household loads (e.g. such as the household loads 6) from a bidirectional EV charger, a neutral reference must be formed to power the 120V loads that are connected between Line 1 and Neutral or Line 2 and Neutral (FIG. 1), because without a neutral reference, the voltage will divide unevenly across the 120V loads based on the difference in the load impedance, causing the voltage to go out of the normal tolerance range. The center-tapped utility transformer provides this neutral reference when the load center 10 is connected to the electrical grid 3, so when the load center 10 is islanded from the electrical grid, the neutral reference must be formed elsewhere.

In FIG. 2, a controller 102 is depicted as being housed in the same housing as the neutral forming converter 100, although the controller 102 can instead be in communication with the neutral forming converter 100 while being physically separated from the neutral forming converter 100 (i.e. as depicted in FIG. 3). Regardless of whether the controller 102 is physically housed in the same housing as the neutral forming converter 100 or physically separated from the neutral forming converter 100, the controller is configured to be powered by a single-phase power source (e.g. the EV charger 8) and can also be powered by a backup battery (sometimes called a "dark start battery"). The converter's controller 102 is configured to communicate with the main breaker's controller 25. The converter's controller 102 and the electric vehicle 5 (or other AC single phase power source 5) can indirectly communicate by using the main breaker's controller 25 as an intermediary.

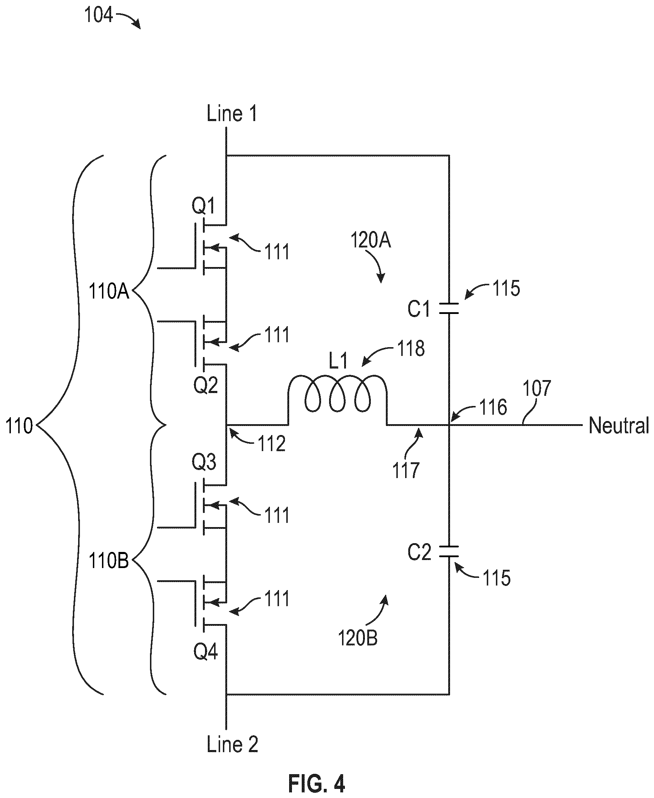

The neutral forming converter 100 comprises a neutral forming circuit 104, and the controller 102 is configured to selectively activate the neutral forming circuit 104 (one embodiment of the neutral forming circuit 104 is shown in FIG. 4, with details of its structure and activation being provided later herein). In particular, the controller 102 is configured to activate the neutral forming circuit 104 of the neutral forming converter 100 only after confirming that the load center 10 is islanded from the electrical grid 3. That is, prior to activating the neutral forming circuit 104, the controller 102 confirms that the main breaker 11 is not receiving power from the electrical grid 3 and instructs the main breaker 11 to open its switch mechanism if the switch mechanism is not already open (e.g. by communicating with the controller 25 of the main breaker 11), in order to ensure that the main breaker 11 is electrically isolated from the electrical grid 3.

The controller 102 is configured to ensure that the neutral forming converter 100 only operates when the load center 10 is islanded from the electrical grid 3. After confirming that the load center 10 is islanded from the electrical grid 3, the controller 102 communicates with the electric vehicle 5 (or other AC single phase power source 5) to enable the EV 5 to supply power to the load center 10. The inverter 9 has a two-wire topology and is configured such that the EV charger 8 outputs 240V AC at 60Hz to the main bus 11A. When the load center 10 is islanded from the electrical grid 3 and the EV charger 8 is supplying power to the load center 10, the power output by the EV charger 8 is input to the main bus 11A via the branch breaker 12D. In turn, the neutral forming converter 100 is supplied with the 60 Hz, 240V AC power that is supplied to the main bus 11A from the branch breaker 12D.

As shown in FIG. 3, once the neutral forming converter 100 connects to the power output by the EV charger 8 via the main bus 11A, the neutral forming converter 100 can output to the main bus 11A a center neutral reference voltage, the center neutral reference voltage being the voltage at the midpoint between Line 1 and Line 2. The neutral forming converter 100 is able to achieve this due to its neutral forming circuit 104 (FIG. 4) being configured to output a node that provides a neutral reference. Referring now to FIG. 4, the electronics of the neutral forming circuit 104 are shown schematically, in accordance with one example embodiment of the disclosed concept. The neutral forming circuit 104 is structured to be electrically connected between two line conductors (i.e. Line 1 and Line 2 as labeled in FIG. 4 and FIG. 3) and to a neutral conductor 107. It should be understood that Line 1, Line 2, and Neutral (conductor 107) correspond to the conductors of the main bus 11A. Although not discussed in detail herein, it is noted that the neutral forming converter 100 can optionally include a number of sensors 108 configured to detect, for example and without limitation, voltage, current, frequency, and temperature. The neutral forming converter 104 comprises a semiconductor arrangement 110, a plurality of capacitors 115, and a current-limiting inductor 118.

Continuing to refer to FIG. 4, the semiconductor arrangement 110 is connected between Line 1 and Line 2, the semiconductor arrangement 110 comprising four semiconductor switches 111, individually referred to and numbered in FIG. 4 as Q1, Q2, Q3, and Q4. The specific type of semiconductors 111 used in FIG. 4 are n-channel MOSFETs, and the semiconductor switches 111 are thus also referred to hereafter as the MOSFETs 111. The MOSFETs 111 are electrically connected in alternating opposing orientations between Line 1 and Line 2, such that the drain of Q1 is connected to Line 1, the source of Q2 is connected to the source of Q1, the drains of Q3 and Q2 are connected to another and to Neutral, the source of Q4 is connected to the source of Q3, and the drain of Q4 is connected to Line 2.

It will be appreciated that other configurations of the semiconductor switches 111 can be implemented instead of the specific configuration shown in FIG. 4 without departing from the scope of the disclosed concept, as the determinative aspect of the semiconductor arrangement 110 is that the semiconductor switches 111 are connected in alternately opposing orientations. That is, for a given semiconductor switch 111 in the arrangement 110, the semiconductor switch 111 is oriented in the opposite orientation of any adjacent semiconductor switches 111 in the arrangement 110. Thus, with respect to the specific implementation of the semiconductor arrangement 110 shown in FIG. 4, the arrangement 110 would function equivalently if the Q1 and Q2 were instead arranged such that their drains were connected to one another and their sources were respectively connected to Line 1 and Neutral, and if Q3 and Q4 were instead arranged such that their drains were connected to one another and their sources were respectively connected to Neutral and Line 2. The switching functionality of the semiconductor switches 111 is detailed further later herein, and it should be understood that such switching functionality can be achieved using IGBTs, HEMTs, and/or various other types of transistors other than MOSFETs.

The semiconductor arrangement 110 is subdivided into two branches 110A and 110B, with the branch 110A comprising Q1 and Q2 and the branch 110B comprising Q3 and Q4. The two branches 110A and 110B are connected to one another at a node 112, i.e., the drain of Q2 and the drain of Q3 are connected at the node 112. It is noted that the two branches 110A and 110B have opposite orientations to one another relative to the node 112. The controller 102 is configured to input control signals to the gates of the MOSFETs 111 in order to rapidly switch the MOSFETs 111 on and off. Statements made herein that refer to "activating" the neutral forming circuit 104 or "enabling" the neutral forming converter 100 are intended to refer to the controller 102 rapidly switching the MOSFETs 111 on and off.

The capacitors 115 are connected in series with one another such that a node 116 exists between the capacitors 115. The two capacitors 115 are individually referred to and numbered in FIG. 4 as C1 and C2. The capacitors 115 are connected in parallel with the semiconductor arrangement 110, such that one capacitor 115 is connected across the semiconductor arrangement branch 110A between Line 1 and the node 116 and such that one capacitor 115 is connected across the semiconductor arrangement branch 110B between Line 2 and the node 116. A neutral branch 117 extends between the node 112 and the node 116. The neutral branch 117 comprises a current-limiting inductor 118 (also referred to and labeled in FIG. 4 as L1) connected in series between the node 112 and the node 116. The neutral conductor 107 of the main bus 11A connects to the node 116 of the neutral forming converter 104 as shown in FIG. 4.

The semiconductor switches 111 are connected back-to-back so that each semiconductor arrangement branch 110A, 110B can block current flow in either direction. The configuration of the current-limiting inductor 118 and the capacitors 115 functions as a filter to the output of the neutral line 117 that mitigates ripple and noise in the AC voltage and current waveforms output by the neutral forming circuit 104, as detailed further later herein. The filter formed by capacitor C1 and inductor L1 can be referred to as the filter 120A, while the filter formed by the capacitor C2 and inductor L1 can be referred to as the filter 120B, and both filters can be referred to generally with the reference number 120. In addition, in the absence of the current-limiting inductor 118, connecting the capacitors 115 across from their corresponding semiconductor arrangement branches 110A, 110B would short the capacitors 115, hence the current-limiting inductor 118 is connected in series between node 112 and 116 to prevent shorting of the capacitors 115.

Alternately switching the semiconductor switches 111 on and off at a frequency (e.g. 10 kHz to 15 kHz) much higher than the AC line frequency of the system (60 Hz for an EV charger in North America) enables a current to form in the neutral conductor 117 to balance the voltage between the loads connected from Line 1 to neutral and between the loads connected from Line 2 to Neutral. As detailed further hereafter, the frequency at which the semiconductor switches 111 are switched on and off is also dictated by the resonance of the LC filters 120, as the switching must occur at a frequency much higher than the resonance frequency of the LC filters 120.

As employed herein, the term "balanced" is used to signify voltage balancing across Line 1 and Neutral and across Line 2 and Neutral, in accordance with the specifications set by the local electric code or utility. It will be appreciated that true voltage balancing is rarely possible to achieve, and that loads are typically considered to be balanced when the voltages across the loads are within a given tolerance range. For example, the ANSI C84.1 standard requires that a utility source deliver voltage within the range of 94%-104% of the nominal voltage at the meter. Although the load center 10 may not be required to comply with the standards set for grid-connected systems once it is islanded, it is beneficial to aspire to similar standards, as allowing the voltages of the household loads 6 to stray too far from the nominal value can cause the equipment in the home to malfunction.

Several salient features of the neutral forming circuit 104 are important to note. While the topology of the neutral forming circuit 104 appears similar to that of a half-bridge converter, the specific combination of the semiconductor switches 111 with the LC filters in the neutral forming circuit 104 and its application for generating a neutral reference voltage is novel. Alternately switching the switch pairs 110A and 110B ON and OFF actively balances the voltage across C1 and C2 to satisfy varying load conditions. The alternating opposing orientations of the semiconductor switches 111 makes it possible for the neutral forming circuit 104 to output two independent AC sources that are 180° phase shifted, when fed from a single AC supply (e.g. the EV charger 8). The capacitors C1 and C2 circulate inductive load current and filter the high frequency ripple voltage at the output. The capacitors C1 and C2 also handle significant circulating current due to imbalanced voltages arising across Line 1 and Neutral and across Line 2 and Neutral. The filter inductor L1 prevents high frequency noise from appearing at the load side and from flowing into any connected loads (e.g. the household loads 6) that use the neutral forming circuit 104 as an AC source.

It should be appreciated that when there is a rated load across Line 1 and Neutral, the rated load current flows equally through the switch pairs 110A and 110B. Only one half of the load current returns back to the AC source (i.e. inverter 9) alternately via switch pair 110A and switch pair 110B to complete the current path. This matches the fact that the current through the AC source is half of the load current since the source voltage is two times the load voltage. This ensures power balance operation between input and output of the neutral forming converter 100. The circulating ripple current flow is important in actively balancing the voltage across C1 and C2 irrespective of where the load is connected. Inductor L1 needs to be rated to handle the rated source current (i.e. of the EV charger 8). Since the source current also flows through the capacitors C1 and C2, C1 and C2 have to be rated to handle the rated source current as well.

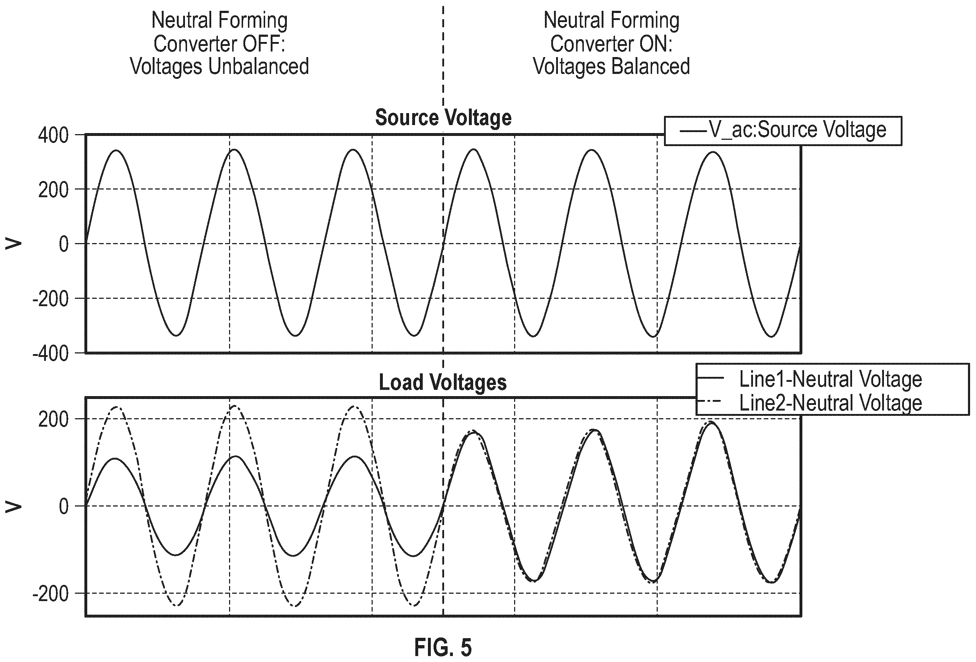

FIG. 5 shows two aligned graphs of simulated voltage waveforms present in the load center 10 before and after activation of the neutral forming converter 100. The top graph shows the waveform of the 240V rms single-phase voltage supplied by the EV charger 8 to the neutral forming converter 100. The bottom graph shows the voltages across two household loads 6 having different impedances and each requiring 120V rms voltage, i.e. one household load 6 being connected from Line 1 to neutral and having a first impedance, and one household load 6 being connected from Line 2 to Neutral and having a second impedance. As shown on the left side of the bottom graph, before the neutral forming converter 100 is enabled, the voltages of the two household loads 6 are unbalanced due to the different load impedances. However, as shown on the right side of the bottom graph, enabling the neutral forming converter 100 allows the voltages from Line 1 to neutral and Line 2 to Neutral to be balanced at approximately 120V rms, due to the differential current between the two household loads 6 being able to flow through the neutral line 117 when the neutral forming circuit 104 is activated.

It will be appreciated that the disclosed neutral forming converter 100 provides a neutral reference in a form factor that occupies significantly less space and is significantly less heavy, bulky, and expensive than an autotransformer, which is a known solution for forming a neutral reference for a single-phase power source. The neutral forming converter 100 can either be provided as part of a load center 10 or made available to be connected to an existing load center 10.

While specific embodiments of the invention have been described in detail, it will be appreciated by those skilled in the art that various modifications and alternatives to those details could be developed in light of the overall teachings of the disclosure. Accordingly, the particular arrangements disclosed are meant to be illustrative only and not limiting as to the scope of disclosed concept which is to be given the full breadth of the claims appended and any and all equivalents thereof.

## Claims

1. A neutral forming converter structured for use with a single-phase power source in order to power loads connected to a load center, the neutral-forming converter comprising:
a neutral forming circuit structured to receive as input a single-phase AC voltage across a first line conductor and a second line conductor, the neutral forming circuit being configured to output the single-phase AC voltage with a center point neutral reference voltage, the center point neutral reference voltage being voltage at the midpoint between voltage of the first line conductor and voltage of the second line conductor; and
a controller configured to activate the neutral forming circuit,
wherein the neutral forming circuit is structured such that, when a first load is connected between the first line conductor and the center point neutral reference and has a first impedance and a second load is connected between the second line conductor and the center point neutral reference and has a second impedance different from the first impedance, the voltage across the first load and the voltage across the second load are balanced.

2. The neutral forming converter of claim 1,
wherein the controller is configured to only activate the neutral forming circuit after confirming that the load center is islanded from a utility electrical grid.

3. The neutral forming converter of claim 2,
wherein the controller is configured to instruct the single-phase AC power source to supply power to the load center after confirming that the load center is islanded from the utility electrical grid.

4. The neutral forming converter of claim **1,**
wherein the controller is configured to be powered by single-phase AC voltage.

5. The neutral forming converter of claim 1,
wherein the neutral forming circuit comprises a semiconductor arrangement comprising a plurality of semiconductors, a plurality of capacitors including a first capacitor and a second capacitor, and an inductor,
wherein the semiconductor arrangement and the plurality of capacitors are connected in parallel between the first line conductor and the second line conductor,
wherein the semiconductor arrangement comprises a first branch and a second branch, with the first branch comprising a first number of the semiconductors and the second branch comprising a second number of the semiconductors, and with a first node being positioned between the first branch and the second branch,
wherein the first capacitor and second capacitor are positioned in series such that a second node exists between the first capacitor and the second capacitor,
wherein the inductor is connected between the first node and the second node, and
wherein the center point neutral reference voltage is output at the second node.

6. The neutral forming converter of claim 5,
wherein the plurality of capacitors and the inductor form a filter inherently having a resonance frequency,
wherein the semiconductor arrangement is configured to block current flow in both directions,
wherein the controller is configured to rapidly switch the plurality of semiconductors on and off at a frequency that exceeds the frequency of the single-phase AC voltage and exceeds the resonance frequency of the filter.

7. The neutral forming converter of claim 5,
wherein the first branch of the semiconductor arrangement comprises a first n-channel MOSFET and a second n-channel MOSFET,
wherein the second branch of the semiconductor arrangement comprises a third n-channel MOSFET and a fourth n-channel MOSFET,
wherein the drain terminal of the first n-channel MOSFET is connected to the first line conductor and the drain terminal of the second n-channel MOSFET is connected to the second line conductor,
wherein the source terminal of the first n-channel MOSFET is connected to the source terminal of the second n-channel MOSFET,
wherein the source terminal of the third n-channel MOSFET is connected to the source terminal of the fourth n-channel MOSFET, and
wherein the drain terminal of the second n-channel MOSFET is connected to the drain terminal of the third n-channel MOSFET and to the first node.

8. The neutral forming converter of claim 1,
wherein the neutral forming converter is structured to connect to a first branch circuit breaker of the load center, the first branch circuit breaker being connected to a bus of a main circuit breaker of the load center,
wherein the neutral forming converter is structured to receive the single-phase AC voltage from the first branch breaker, and
wherein the neutral forming converter is structured to provide the center point neutral reference to the bus such that any circuit breaker connected to the bus can connect to the center point neutral reference.

9. A load center, the load center comprising:
a main circuit breaker structured to connect to a utility electrical grid and comprising a main bus,
a plurality of branch circuit breakers connected to the main bus, the plurality of branch circuit breakers including:
a first branch circuit breaker structured to electrically connect to a single-phase AC power source; and
a plurality of other branch circuit breakers that excludes the first circuit breaker, each other branch circuit breaker being structured to electrically connect to a unique load; and
a neutral forming inverter, the neutral-forming converter being electrically connected to the first branch circuit breaker and comprising:
a neutral forming circuit configured receive as input from the first branch circuit breaker a single-phase AC voltage across a first line conductor and a second line conductor, the neutral forming circuit being configured to output the single-phase AC voltage with a center point neutral reference voltage, the center point neutral reference voltage being voltage at the midpoint between voltage of the first line conductor and voltage of the second line conductor; and
a first controller configured to activate the neutral forming circuit,
wherein the neutral forming circuit is structured such that, when a first load is connected between first line conductor and the center point neutral reference and has a first impedance and a second load is connected between the second line conductor and the center point neutral reference and has a second impedance different from the first impedance, the voltage across the first load and the voltage across the second load are balanced, and
wherein the neutral forming converter is structured to provide the center point neutral reference to the main bus such that any circuit breaker connected to the main bus can connect to the center point neutral reference.

10. The load center of claim 9,
wherein the first controller is configured to only activate the neutral forming circuit after confirming that the load center is islanded from the electrical grid.

11. The neutral forming converter of claim 10,
wherein the first controller is configured to instruct the single-phase AC power source to supply power to the load center after confirming that the load center is islanded from the utility electrical grid.

12. The load center of claim 9,
wherein the first controller is configured to be powered by single-phase AC voltage.

13. The load center of claim 9,
wherein the main circuit breaker comprises a second controller, and
wherein the second controller is configured to actuate islanding of the main circuit breaker from the electrical grid.

14. The load center of claim 9,
wherein the neutral forming circuit comprises a semiconductor arrangement comprising a plurality of semiconductors, a plurality of capacitors including a first capacitor and a second capacitor, and an inductor,
wherein the semiconductor arrangement and the plurality of capacitors are connected in parallel between the first line conductor and the second line conductor,
wherein the semiconductor arrangement comprises a first branch and a second branch, with the first branch comprising a first number of the semiconductors and the second branch comprising a second number of the semiconductors, and with a first node being positioned between the first branch and the second branch,
wherein the first capacitor and second capacitor positioned in series such that a second node exists between the first capacitor and the second capacitor,
wherein the inductor is connected between the first node and the second node, and
wherein the center point neutral reference voltage is output at the second node.

15. The load center of claim 14,
wherein the plurality of capacitors and the inductor form a filter inherently having a resonance frequency,
wherein the semiconductor arrangement is configured to block current flow in both directions,
wherein the first controller is configured to rapidly switch the plurality of semiconductors on and off at a frequency that exceeds the frequency of the single-phase AC voltage and exceeds the resonance frequency of the filter.
